# EUROPEAN PATENT APPLICATION

(11) **EP 1 511 190 A1**
(43) Date of publication of application: **02.03.2005**
(21) Application number: 03019387.4
(22) Date of filing: 27.08.2003
(51) Int. Cl.: H04B 7/26

(54) **Method for transmission in a TDD system with variable length guard period**

(71) Applicant: SIEMENS AKTIENGESELLSCHAFT, 80333 München (DE)
(72) Inventor: Kammerlander, Karl, 81543 München (DE)

(57) **Abstract**

The transmission of signals between a base station (BTS1) of the radio communication system and at least one user terminal (UE) is arranged in timeframes (tf), wherein each timeframe (tf) consists of at least one timeslot (TS0,DwPTS) for downlink transmission from the base station (BTS1) to the at least one user terminal (UE) and at least one timeslot (TS1,UpPTS) for uplink transmission from the at least one user terminal (UE) to the base station (BTS1), and wherein said timeslots for the different transmission directions (DL,UL) are separated by at least one switching point (DL/UL-SP). The invention is characterised in that the length of a guard period (GP) of the at least one switching point (DL/UL-SP) is adapted according to transmission parameters determined in the guard period (GP) and/or the at least one timeslot (TS1,UpPTS) for uplink transmission.

## Description

### Field of the invention

The invention relates to a method and a base station for transmitting signals in a radio communication system, especially for application in mobile radio communications systems.

### Background of the invention

In radio communications systems, signals are exchanged between radio terminals and base stations via a so called radio interface or air interface. Radio terminals are in general mobile or stationary user terminals (UE - user equipments), whereas base stations (NB - Node B) are access stations associated with a land based communication network. Examples of known radio communication systems are second generation digital mobile radio communications systems like GSM (Global System for Mobile Communication) based on TDMA (Time Division Multiple Access) and providing data rates up to 100 kbit/s, and third generation digital mobile radio communications systems like UMTS (Universal Mobile Telecommunication System) based on CDMA (Code Division Multiple Access) with data rates up to 2 Mbit/s.

A plurality of standards have been defined by the ITU (International Telecommunication Union) for the radio interface of 3^{rd} generation mobile radio networks. Some of these standards are known under the terms UTRA-FDD or UTRA-TDD standardised by 3GPP (Third Generation Partnership Project), and CDMA2000 standardised by 3GPP2. The UTRA-TDD standard is thereby divided into a so called 3.84 Mcps High Chiprate (HCR) option and a so called 1.28 Mcps Low Chiprate (LCR) option, both based on the standardised UMTS (Universal Mobile Telecommunication System) network infrastructure. The radio interface configuration of the LCR option is furthermore nearly identical with the so called TD-SCDMA standard, which is based on the GSM network infrastructure and standardised by CWTS (Chinese Wireless Telecommunication Standard) in China.

In contrast to said High Chiprate option of UTRA-TDD (TDD-HCR) which is mainly intended for indoor deployment of micro- and/or pico cells, the Low Chiprate option of UTRA-TDD (TDD-LCR) as well as the CWTS TD-SCDMA standard are configured to be deployed even in macro-cell environments covering cells with a radius of up to 30km. For this reason, antennas of base stations using said TDD-LCR or TD-SCDMA standard are more often installed in greater heights e.g. on towers or roof tops of high buildings in order to cover a greater area with their radio resources. In comparison to an indoor deployment, these cells are thus less isolated from each other, leading to the problem of increased interference.

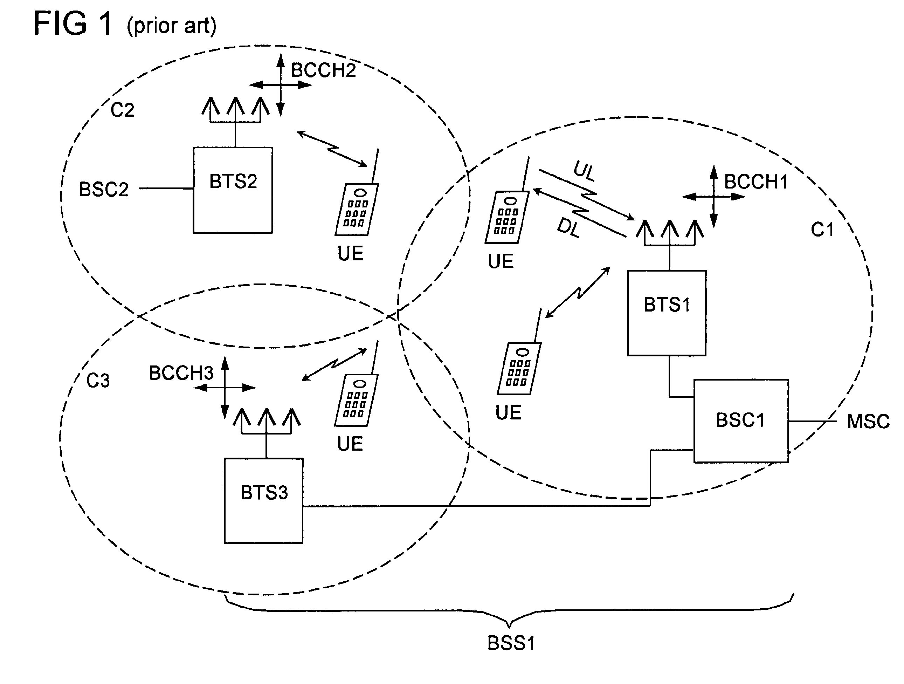

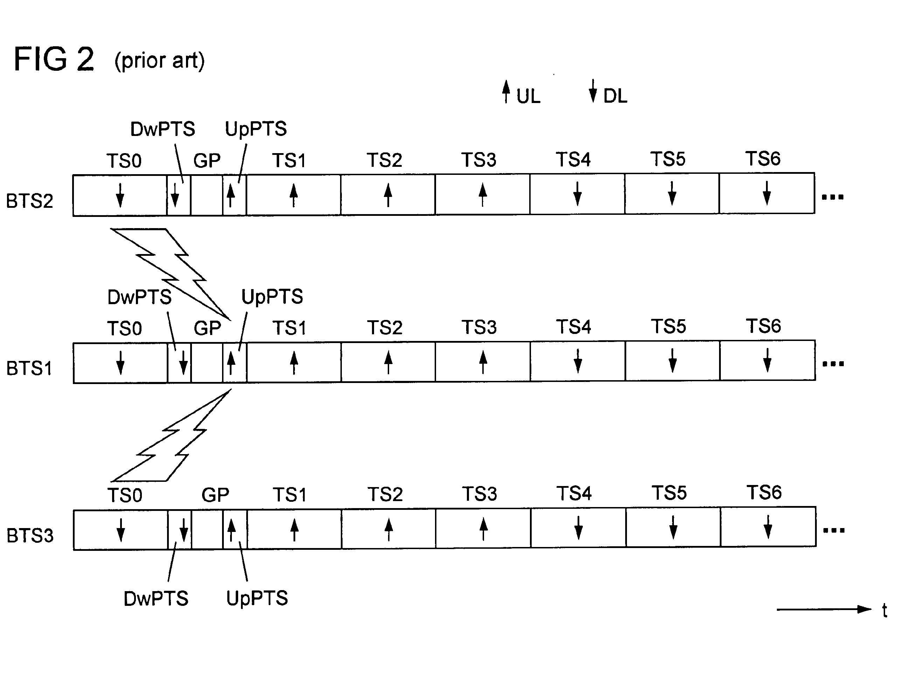

FIG 2 in combination with FIG 1, which will be described in more details later, shows a problem that might arise when deploying a number of base stations (BTS1, BTS2, BTS3) using the TDD-LCR or TD-SCDMA standard. These standards are based on TDD (Time Division Duplex), i.e. each timeframe consists of both timeslots (TS0,DwPTS, TS4...TS6) for downlink (DL) transmission of signals from a base station to one or a number of user terminals (UE) in the cell (C1, C2, C3) covered by the base station, and timeslots (UpPTS, TS1...TS3) for uplink (UL) transmission of signals from the user terminals to the base stations.

In TDD-LCR and TD-SCDMA standard, the first timeslot (TSO) of a timeframe is used by the base station for the transmission of general system information in a broadcast channel (BCCH - Broadcast Control Channel) with a relatively high transmission power in order to reach even the furthest user terminals in the cell covered by the base station. In general, the cell of a base station is defined by the range of the broadcast channel. The first timeslot is followed by a pilot timeslot (DwPTS) in which signals for synchronising user terminals are transmitted, a guard period (GP) which represents a first switching point between the downlink and uplink transmission direction, and an uplink pilot timeslot (UpPTS, also known as UATS - Uplink Access Timeslot) which is used by user terminals for the transmission of first access requests to the base station. The uplink pilot timeslot is followed by a number of uplink timeslots and a number of downlink timeslots after a - not depicted - second switching point for data and signal transmission between base station and user terminals.

In such systems where neighbouring base stations are synchronised and use the same frequency bands or carrier frequencies, the situation could occur, as indicated by the flashes in FIG 2, that signals transmitted by neighbouring base stations (BTS2, BTS3) in the first timeslot (TSO) and/or downlink pilot timeslot (DwPTS) are received in the uplink pilot timeslot (UpPTS) of a first base station (BTS1) e.g. due to reflections, different cell sizes or other constant or variable radio propagation parameters. In such a situation, these downlink signals from neighbouring base stations interfere with uplink access request signals from user terminals and therefore substantially reduce the access probability of user terminals that are e.g. situated at the cell border or indoors and which signals are hence highly attenuated.

It is therefore an object of the invention to provide a method and a base station that solve the above described problems. This object is addressed by the method and the base station with the features of the independent claims.

### Statement of the invention

According to a first aspect of the invention, the guard period of a switching point between a downlink timeslot and an uplink timeslot is adapted in length dependent on transmission parameters determined in the guard period (GP) and/or in the uplink timeslot.

In a TDD-LCR or TD-SCDMA system described above, this would mean, that the length of the guard period of the first switching point between the downlink pilot timeslot and the uplink pilot timeslot is adjusted according to measurements, e.g. interference measurements of downlink signals from neighbouring base stations performed by the first base station in the guard period (GP) and/or uplink pilot timeslot. If the first base station determines that the interference caused by neighbouring base stations e.g. exceeds a first predetermined threshold, the length of the guard period is extended by a certain number of chips, symbols or even timeslots. Additionally, when determining that the interference falls below a second threshold, the once extended guard period could be shortened again by the same or different number of chips, symbols or timeslots. These measurements and adjustments of the guard period could by effected constantly, periodically or triggered by certain events. In either case, the reliability of the measurements effected in the uplink pilot timeslot should increase with the generation of average values based on a number of consecutive timeframes.

According to a second aspect of the invention, when a base station provides at least two frequency bands for the transmission of signals to/from user terminals, one of the at least two frequency bands provides timeframes with an extended guard period of the switching point in comparison to timeframes of the at least one other frequency band.

The length of the extended guard period is e.g. configured by the network operator when installing the base station. Because of the different timeframe structures or parameters when using an extended guard period in one of the frequency bands, only the timeframe with the extended guard period contains a timeslot for a first access signalling in uplink, e.g. only one out of three frequency bands provided by the base station contains an uplink pilot timeslot. Because of this, the signalling load to the user terminal could be substantially reduced.

According to an advantageous enhancement of the methods, the new configuration of the timeframe with the adapted guard period or the length of the guard period is signalled by the base station to the user terminals. This might be necessary because user terminals in the cell must know e.g. where the uplink pilot timeslot is located within the timeframe in order to be able to access the base station. Because of possible variations in the length of the guard period, the timeframe structure is changed in comparison to the structure defined in the corresponding standards. The base station uses e.g. the broadcast channel mentioned above for the signalling of the parameters of the timeframe or guard period respectively.

Further aspects of the invention are disclosed in the following description of the figures.

### Brief description of the figures

The invention may be understood more readily, and various other aspects and features of the invention may become apparent from consideration of the following description and the figures as shown in the accompanying drawing sheets, wherein:
- FIG 1: depicts a block diagram of a radio communication network,
- FIG 2: shows three timeframes of three neighbouring base stations and an interference situation that could occur in the art,
- FIG 3: is a schematic showing the structure of a timeframe known in the art,
- FIG 4: is a schematic showing the structure of a timeframe according to the invention,
- FIG 5: shows three timeframes of a base station with three carrier frequencies,
- FIG 6: shows a flow chart of a method according to one aspect of the invention.
- FIG 7: shows components in a base station and user terminal according to the invention.

### Detailed description of the invention

FIG 1 shows the basic structure of a mobile radio communications system, e.g. a system based on a TD-SCDMA or TDD-LCR standard. The system consists of a central mobile switching center MSC (not shown) which is coupled to the public switched telephone network PSTN and other MSCs. Connected to a MSC are a plurality of base station controllers BSC1, BS2, which inter alia coordinate the sharing of radio resources provided by base stations BTS1...BTS3 (Base Transceiver Station). The arrangement of base stations and base station controller is defined as base station subsystem BSS1. In the example shown, base stations BTS1 and BTS3 are connected to a first base station controller BSC1, whereas base station BTS2 is connected to a second base station controller BSC2 (not depicted), both base station controller BSC1, BSC2 are connected to the same mobile switching center MSC. Base stations BTS1...BTS3 transmit in downlink DL and receive in uplink UL signals respectively to or from user terminals UE (User Equipment) situated within cells C1...C3 covered by the base stations BTS1...BTS3. Apart from data transmission to/from the user terminals, the base stations BTS1...BTS3 also broadcast general system information in broadcast channels BCCH1...BCCH3. In FIG 1 the base stations BTS1...BTS3 each comprise an antenna array consisting of a number of antenna elements. An antenna array, sometimes also called smart antenna, is used for beamforming of signals transmitted to individual user terminals in order to reduce interference caused to signal transmissions of parallel connections to other user terminals.

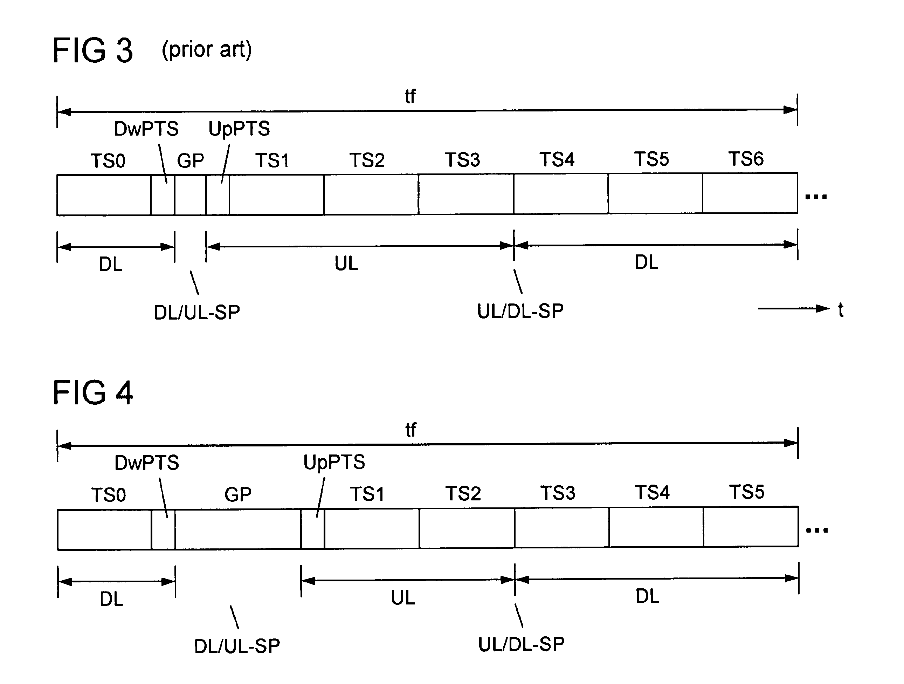

FIG 3 depicts the structure of a timeframe tf as specified in the TDD-LCR and TD-SCDMA standards. The timeframe tf with a length of 5ms consists of a first timeslot TS0 of 662,5us (1 symbol = 12,5us = 16 chips) which is used by a base station inter alia for the transmission of broadcast information in the BCCH in downlink DL to user terminals situated in the cell covered by the base station. Following the first timeslot TS0, a so called downlink pilot timeslot DwPTS with a length of 50us is used by the base station for the transmission of synchronisation sequences in downlink, which are used by user terminals for a synchronisation to the timing of the base station. Between the downlink pilot timeslot DwPTS and the first timeslot for uplink transmission, a guard period GP with a length of 75us is used as a first switching point DL/UL-SP between the two transmission directions DL and UL. The first timeslot for uplink transmission is the so called uplink pilot timeslot UpPTS or uplink access timeslot (UATS) with a length of 100us, which is used by user terminals for the transmission of sequences for a first access to the base station in a random access procedure. The uplink pilot timeslot UpPTS is followed by a number of uplink timeslots TS1...TS3 and downlink timeslots (TS4...TS6), each with a length of 662,5us, for normal transmission of signals and data to/from user terminals. The second switching point UL/DL-SP is a so called variable switching point with a position within the six timeslots TS1...TS6 that could be adapted according to current traffic load in the two transmission directions UL and DL.

FIG 4 depicts the structure of a timeframe tf which is adapted according to the invention. In this case, the guard period GP defining the first switching point DL/UL-SP is extended by the length of a normal timeslot TS. Alternatively, the guard period could also be extended in steps of chips, symbols or even a number of timeslots. As a consequence of the extended guard period GP, the position of the uplink pilot timeslot UpPTS within the timeframe tf is changed in comparison with the timeframe tf described with reference to FIG 3 according to the standard. Moreover, the number of time-slots TS1...TS5 for the transmission of user data is reduced accordingly. The changes in the structure or parameters of the timeframe tf are signalled to user terminals UE in the broadcast channel BCCH, e.g. by means of a particular information element specifying the new location of the uplink pilot timeslot UpPTS within the timeframe tf as an absolute value or relative to the position of the broadcast channel BCCH.

The extended guard period GP in FIG 4 makes sure that received signals from neighbouring base stations BTS2, BTS3 have attenuated to a degree that they do not interfere with signals from user terminals in the uplink pilot timeslot UpPTS at the highly sensitive receiver input in the base station BTS1. Because of this, the throughput of user terminal signals, which are comparatively weak due to high path losses, can be substantially increased.

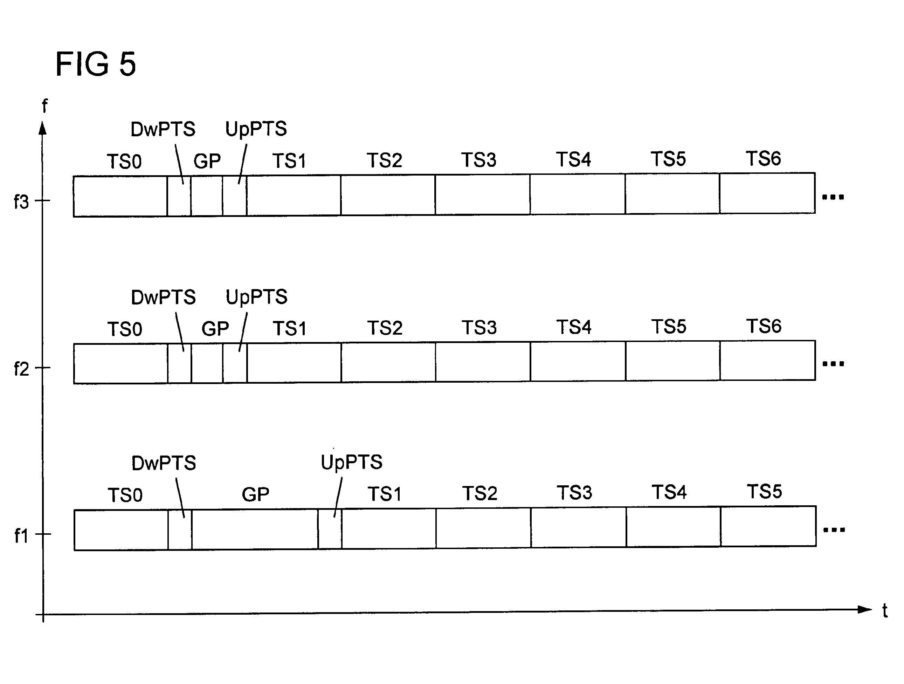

The TDD-LCR as well as the TD-SCDMA standard are based on frequency bands of 1,6MHz. Because a network operator is normally allocated frequency spectrum divided into 5MHz blocks, a base station would make use of three frequency bands of 1.6MHz to cover a cell with radio resources. Such a situation is depicted in FIG 5, in which a base station uses three carrier frequencies f1, f2 and f3 for the radio communication to/from user terminals in the cell. The timeframes of all carrier frequencies are synchronised. According to an aspect of the invention, the timeframes of carrier frequency f1 provide an extended guard period GP and an uplink pilot timeslot UpPTS, whereas the timeframes of the two other carrier frequencies f2 and f3 provide guard periods GP of normal length and no uplink pilot timeslot. The base station signals in broadcast channels in one or all three frequency bands, that only carrier frequency f1 provides the uplink pilot timeslot UpPTS for first access signalling where it is located in the timeframe. This way, user terminals are able to synchronise to the base station by means of the downlink pilot timeslots DwPTS and receive broadcast information in the corresponding first downlink timeslot TS0 in one or all three frequency bands.

The length of the guard period GP can be determined by the network operator as a constant value when installing respectively the base station or the antenna unit attached to it. By measuring the interference caused by neighbouring base stations, an optimal location of the uplink pilot timeslot could be found with the objective of not substantially reducing the transmission capacity. Additionally or alternatively, the length of the guard period is adapted dynamically by the base station. This could be done constantly, periodically, e.g. every 5 minutes, or initiated by certain events, e.g. changes in the interference situation due to the installation of a new neighbouring base station. Because interference situations at the base station site vary in time, adjustments of the length of the guard period should be based on determined average values.

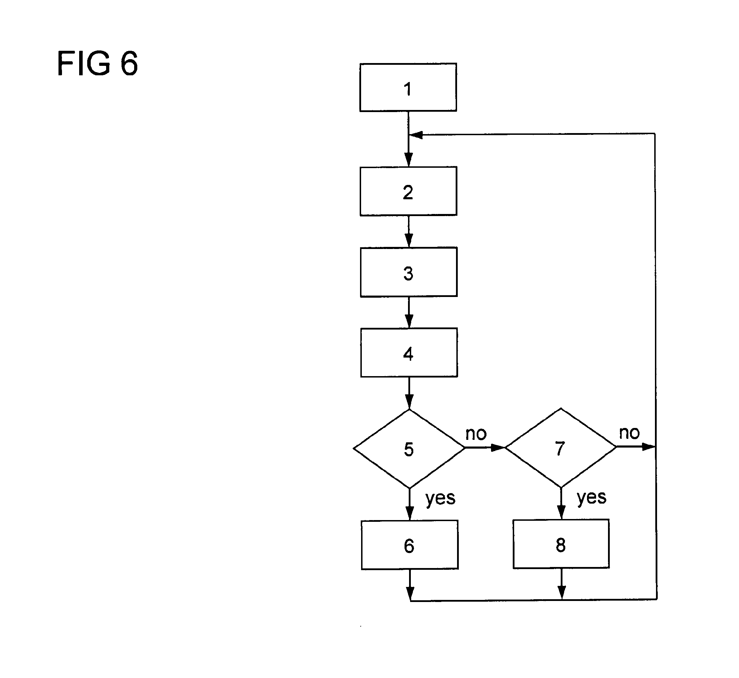

FIG 6 shows an exemplary flowchart of the method according to the invention when dynamically adapting the length of the guard period. The invention is not limited to the individual steps described in the following, variations in the sequence or content of the steps that are obvious to a skilled person and lead to the same results should also be covered.

In the first step 1 of the procedure, the length of the guard period of the first switching point is determined for the first time. This could e.g. be done by the network operator when installing the base station. In a second step 2, the timeframe parameters are signalled to user terminals as described above. In a subsequent third step 3, signals from user terminals and neighbouring base stations are received in the time interval of the guard period and/or uplink pilot timeslot UpPTS and one or more transmission parameters, e.g. a signal to interference (SIR) ratio, are determined. The parameters are determined as current parameters or as average value based on measurements carried out in a number of consecutive timeframes. In step 5, the determined parameter is compared with a first threshold. If the parameter or parameters exceed the first threshold (yes), the length of the guard period is extended by a certain amount of time, e.g. a number of chips, symbols or timeslots, step 6. If the determined parameter or parameters do not exceed the first threshold (no), they are compared with a second threshold, step 7. If the parameter falls below the second threshold, i.e. the interference caused by neighbouring base stations does not have any negative influence on the throughput of signals from the user terminals, the length of the extended guard period is reduced again in steps of chips, symbols or timeslots, step 8. If the length of the guard period already corresponds to the length defined in the standard as described above, which represents a minimum length, it is not changed. After adapting the guard period, the procedure is looped back to step 2. By using two thresholds with different values, a hysteresis is defined which prevents from constantly adaptation of the length of the guard period.

As the influence of signals from neighbouring base stations transmitted in downlink in the first timeslot TS0 and downlink pilot timeslot DwPTS decreases with time, an optimum length of the guard period together with an acceptable inference should be easily found by the described steps. Because of varying transmission scenarios and conditions, timeframe and guard period parameters of neighbouring base stations might differ from each other.

The comparison of the determined parameter with thresholds is carried out in the base station individual, whereas the decision on the length of the guard period could as well be made e.g. in an operation and maintenance component in the system, in which case it is controlled by the network operator.

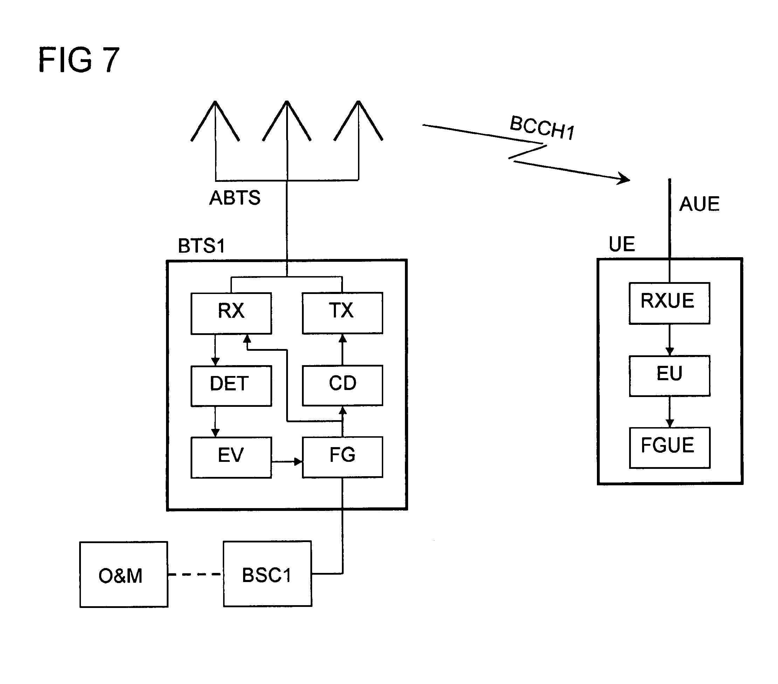

FIG 7 shows a block diagram of components in a base station BTS1 and a user terminal UE which are of relevance for the inventive features. Other well known components in the base station and user terminal without substantive relevance for the inventive features are not depicted.

The base station BTS1 transmits and receives radio signals respectively to and from user terminals UE by means of one or a number of antenna elements of an antenna array ABTS. However, the number of antenna elements has no significance for the invention. The base station BTS1 is furthermore coupled via a base station controller BSC1 and further network components to an operation and maintenance terminal O&M, that allows the network operator to configure the individual network components. In the context of the invention, the operation and maintenance terminal O&M provides information about the structure of the timeframes, i.e. for example the position of the described first and/or second switching point, to the base station controller BSC1, wherein the base station controller BSC1 transfers this information to frame generation means FG in the base station BTS1. The frame generation means FG in the base station BTS1 generate parameters of the timeframes in accordance with the current configuration and provide these parameters to the transmitting TX and receiving means RX coupled to the antenna array ABTS.

By means of the antenna array ABTS and receiving means RX, the base station BTS1 receives signals from user terminals UE situated in the cell covered by the base station BTS1 as well as signals from neighbouring base stations transmitting in the same frequency band. With the help of detection means DET connected to the receiving means RX, the base station BTS1 determines interference parameters. These parameters are determined e.g. as signal to interference ratios or as a so called switch-off slope, i.e. a switch-off time domain level function of the received signals from neighbouring base stations describing the attenuation of the interference caused in the guard period and/or pilot timeslot mentioned above.

The determined interference parameters are then fed to evaluation means EV, in which they are compared with thresholds as described with reference to FIG 6. The thresholds are pre-programmed or adaptively configured e.g. by the operation and maintenance terminal O&M. Depending on results of the comparisons, the length of the guard period is defined and new parameters, i.e. length of the guard period or required delay of the uplink pilot timeslot, are fed to the frame generation means FG. Alternatively, the determined new parameters could be signalled to the operation and maintenance terminal O&M in order to be taken into account for the definition of updated timeframe parameters which are subsequently signalled to the frame generation means FG in the base station BTS1. According to another alternative implementation, new timeframe parameters are determined in the base station controller BSC1 for all base stations BTS1, BTS2 coupled to the base station controller BSC1.

The length of the guard period is e.g. adapted to the determined timeframe parameters by means of a so called window mode counter in the evaluation means EV, in which a number of predetermined guard period lengths are stored and a suitable length selected, or in which the length of the guard period is increased or decreased in steps of predetermined units, e.g. chips, symbols or timeslots.

The updated timeframe parameters fed to the frame generation means FG are subsequently coded in coding means CD, i.e. information elements representing the new parameters are created and transmitted to user terminals UE in a broadcast channel BCCH1 by the transmitting means TX and antenna array ABTS. The information elements contained in the broadcast channel BCCH1 are received by the user terminal UE via an antenna AUE and receiving means RXUE. The information related to the timeframe parameters is extracted from the received information element in extraction means EU connected to the receiving means RXUE, and fed to frame generation means FGUE, in which they are subsequently used to adapt to the correct timeframe structure, i.e. the length/position of the guard period GP and/or position of the uplink pilot timeslot UpPTS.

## Claims

1. Method for transmitting signals in a radio communication system, wherein
the transmission of signals between a base station (BTS1) of the radio communication system and at least one user terminal (UE) is arranged in timeframes (tf), each timeframe (tf) consisting of at least one timeslot (TS0, DwPTS) for downlink transmission from the base station (BTS1) to the at least one user terminal (UE) and at least one timeslot (TS1, UpPTS) for uplink transmission from the at least one user terminal (UE) to the base station (BTS1), wherein said timeslots for the different transmission directions (DL, UL) are separated by at least one switching point (DL/UL-SP),
**characterised in that**
the length of a guard period (GP) of the at least one switching point (DL/UL-SP) is adapted according to transmission parameters determined in the guard period (GP) and/or the at least one timeslot (TS1, UpPTS) for uplink transmission.

2. Method according to claim 1, wherein
said transmission parameters are determined by measurements of signals received from neighbouring base stations (BTS2, BTS3) in the guard period (GP) and/or the at least one timeslot (UpPTS) for uplink transmission.

3. Method according to claim 1 or 2, wherein
said determined transmission parameters are compared with at least one predefined threshold, and
the guard period (GP) is adapted according to the result of the comparison.

4. Method according to one of the preceding claims, wherein said transmission parameters consist of determined signal to interference ratios in the guard period (GP) and/or the at least one timeslot (UpPTS) for uplink transmission.

5. Method according to one of the preceding claims, wherein the determination of the transmission parameters and adaptation of the length of the guard period (GP) is done periodically by the base station (BTS1).

6. Method for transmitting signals in a radio communication system, wherein
the radio interface between a base station (BTS1) of the radio communication system and at least one user terminal (UE) provides at least two frequency bands (f1, f2, f3), and within each frequency band (f1, f2, f3), the transmission of signals between a base station (BTS1) of the radio communication system and at least one user terminal (UE) is arranged in timeframes (tf), each timeframe (tf) consisting of at least one timeslot (TS0, DwPTS) for downlink transmission from the base station (BTS1) to the at least one user terminal (UE) and at least one timeslot (TS1, UpPTS) for uplink transmission from the at least one user terminal (UE) to the base station (BTS1), wherein said timeslots for the different transmission directions (DL, UL) are separated by at least one switching point (DL/UL-SP),
**characterised in that**
for one of said at least two frequency bands (f1), the length of a guard period (GP) of the at least one switching point (DL/UL-SP) is extended in comparison to a guard period (GP) of the switching point (DL/UL-SP) of said at least one other frequency band (f2, f3).

7. Method according to one of the preceding claims, wherein said at least one timeslot (UpPTS) for uplink transmission is used for a first access signalling of the user terminals (UE) to the base station (BTS1).

8. Method according to claim 7, wherein
only the timeframe of the frequency band (f1) containing the adapted guard period (GP) provides said timeslot (UpPTS) for a first access signalling.

9. Method according to one of the preceding claims, wherein said guard period (GP) is adapted in steps of a length of a timeslot.

10. Method according to one of the preceding claims, wherein said base station (BTS1) and further neighbouring base stations (BTS2, BTS3) are synchronised.

11. Method according to one of the preceding claims, wherein said at least one timeslot (DwPTS) for downlink transmission is used for the transmission of broadcast information/signals by the base station.

12. Method according to one of the preceding claims, wherein the structure of the timeframe with the adapted length of the guard period (GP) or the length of the guard period (GP) is signalled to the user terminals (UE) by the base station (BTS1).

13. Method for transmitting signals in a radio communication system, wherein
the transmission of signals between a base station (BTS1) of the radio communication system and at least one user terminal (UE) is arranged in timeframes (tf), each timeframe (tf) consisting of at least one timeslot (TS0, DwPTS) for downlink transmission from the base station (BTS1) to the at least one user terminal (UE) and at least one timeslot (TS1, UpPTS) for uplink transmission from the at least one user terminal (UE) to the base station (BTS1),
**characterised in that**
the position of the at least one timeslot (TS1, UpPTS) for uplink transmission within the timeframe (tf) is selected according to determined transmission parameters.

14. Base station (BTS1) of a radio communication system, with receiving means (ABTS, RX) for receiving signals from user terminals (UE) and base stations (BTS2, BTS3),
detection means (DET) to determine interference parameters from the received signals, and
frame generation means (FG) for generating parameters of timeframes (tf) depending on the determined interference parameters.

15. Base station (BTS1) according to claim 14, with evaluation means (EV) coupled to the detection means (DET) for evaluating the determined interference parameters and to determine a length of a guard period (GP) and/or a position of a timeslot (TS1, UpPTS) for uplink transmission in the timeframes (fr).

16. Base station (BTS1) according to claim 14 or 15, with coding means for coding the generated timeframe parameters, and
transmitting means (TX) for transmitting the coded timeframe parameters to user terminals (UE) in a transmission channel (BCCH1).

17. User terminal (UE), with
receiving means (AUE, RXUE) for receiving information from a base station (BTS1) of the radio communication system, extraction means (EU) for extracting information relating to timeframe parameters from the received signals, and
frame generation means (FGUE) for adapting the timeframe (tf) to the received parameters.
